# FASCICULE DE BREVET EUROPEEN

(11) **EP 2 181 752 B1**
(45) Date de publication et mention de la délivrance du brevet: **08.02.2017**
(21) Numéro de dépôt: 09173745.2
(22) Date de dépôt: 22.10.2009
(51) Int. Cl.: B01D 53/047, B01D 53/04

(54) **Procédé de traitement de fluide par adsorption à variation de pression**
Verfahren zur Behandlung von Fluiden mittels Druck-Wechsel-Adsorption
Process for treatment of a fluid by pressure swing adsorption

(30) Priorité: 03.11.2008 FR 0806099
(43) Date de publication de la demande: 05.05.2010
(73) Titulaire: Mil'S, 69740 Genas (FR)
(72) Inventeur: Gentien, Dominique, 69004 Lyon (FR)
(74) Mandataire: Verriest, Philippe

(56) Documents cités:
- EP-A2- 2 093 188
- WO-A-2006/044278
- DE-A1- 10 323 137
- JP-A- 2004 148 258
- JP-A- 2005 081 258
- JP-A- 2008 195 556
- US-A- 4 802 899
- US-A1- 2008 110 338

## Description

L'invention concerne un procédé de traitement de fluide par adsorption à variation de pression.

Ce type de procédé est également connu sous le terme « PSA » (Pressure Swing Adsorption).

Les centres médicaux sont généralement alimentés en oxygène par l'intermédiaire, soit de bouteilles contenant de l'oxygène sous forme gazeuse et à haute pression, généralement 200 bars, soit de conteneurs fixes alimentés en oxygène liquide. L'oxygène est généralement considéré comme un médicament, en particulier en France, la pureté de l'oxygène médical étant de l'ordre de 99,5 %.

Une telle alimentation en oxygène nécessite des usines de fabrication d'oxygène à proximité, à partir desquelles sont acheminées les bouteilles ou l'oxygène liquide.

Dans les zones où l'acheminement ne peut être réalisé, il est nécessaire que l'oxygène soit produit en quantité suffisante in situ.

Pour cela, il est connu d'utiliser des installations de fabrication d'oxygène fonctionnant selon le procédé PSA.

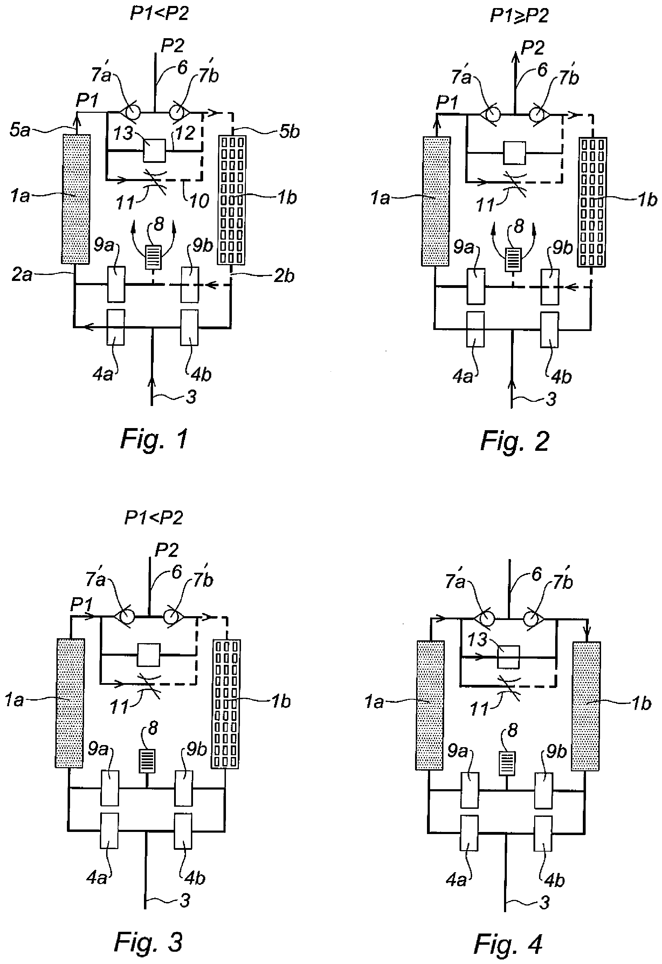

Une installation de l'art antérieur est schématisée à la figure 1. Celle-ci comporte un premier et un second adsorbeurs 1a, 1b, comportant chacun un lit d'adsorbant apte à séparer l'oxygène de l'air. L'air étant essentiellement constitué d'oxygène et d'azote, le lit d'adsorbant permet de piéger l'azote afin d'augmenter la concentration en oxygène. Plus particulièrement, le lit d'adsorbant est un tamis moléculaire constitué de billes de zéolithe.

Chaque adsorbeur 1a, 1b comporte une entrée d'alimentation 2a, 2b reliée à une conduite 3 d'alimentation en air par l'intermédiaire d'une électrovanne 4a, 4b dite d'alimentation et une sortie d'extraction 5a, 5b de l'oxygène produit, reliée à une conduite d'évacuation 6 par l'intermédiaire d'un clapet anti-retour 7-a, 7-b.

Chaque entrée 2a, 2b des adsorbeurs 1a, 1b est en outre reliée à un silencieux de purge ou d'extraction 8 par l'intermédiaire d'une électrovanne 9a, 9b dite de régénération.

De plus, les sorties 5a, 5b des adsorbeurs 1a, 1b sont reliées entre elles par l'intermédiaire d'une première conduite de liaison 10 équipée d'un réducteur de débit réglable 11, et d'une seconde conduite de liaison 12 équipée d'une vanne d'équilibrage 13.

Le fonctionnement de cette installation de l'art antérieur va maintenant être décrit plus en détail.

Dans une première étape, dite de saturation et représentée à la figure 1, les vannes 4a et 9b sont ouvertes et les vannes 4b, 9a et 13 sont fermées.

L'air sous pression est amené par la conduite 3 d'alimentation en air, traverse la vanne d'alimentation 4a associée au premier adsorbeur 1a, et pénètre dans celui-ci de manière à ce que l'oxygène contenu dans l'air soit séparé de l'azote puis rejeté au niveau de la sortie 5a. Au fur et à mesure de l'alimentation en air, la pression P1 au niveau de la sortie 5a du premier adsorbeur 1a augmente.

Parallèlement, l'ouverture de la vanne de régénération 9b permet au gaz retenu dans le second adsorbeur 1b de s'échapper brutalement par le silencieux de purge 8. La pression dans le second adsorbeur 1b passe classiquement d'environ 2,5 bars à 0 bar en une fraction de seconde, ce qui permet de désorber l'azote piégé dans le lit d'adsorbant. Puis, le second adsorbeur 1b est balayé par un courant d'oxygène provenant de la liaison 10 entre les sorties 5a, 5b des premier et second adsorbeurs 1a, 1b afin de terminer la désorption de l'azote. Toutefois, ce courant d'oxygène reste minime du fait de la présence d'un réducteur de débit 11.

Il s'agit de l'étape de saturation du premier adsorbeur 1a et de purge puis régénération du second adsorbeur 1b.

Comme cela est représenté à la figure 2, lorsque la pression P1 à la sortie 5a du premier adsorbeur 1a dépasse la pression P2 à l'intérieur de la conduite d'évacuation 6, l'oxygène produit traverse le clapet anti-retour 7'a et entre dans ladite conduite d'évacuation 6, cette dernière alimentant par exemple un réseau de distribution en oxygène (non représenté). Il s'agit de l'étape de production d'oxygène à l'aide du premier adsorbeur 1a.

Au bout d'une durée déterminée, un système de gestion par temporisation permet de fermer les vannes 4a et 9b.

Dans ce cas, la pression P1 au niveau de la sortie du premier adsorbeur chute en-dessous de la pression P2, de manière à refermer le clapet anti-retour 7'a. L'oxygène restant dans le premier adsorbeur 1a est dirigé vers le second adsorbeur 1b, par l'intermédiaire de la conduite de liaison 10 et du réducteur de débit 11. Cette étape, représentée à la figure 3, est l'étape de pressurisation lente du second adsorbeur 1b.

Ensuite, comme cela est représenté à la figure 4, au terme d'une temporisation, la vanne d'équilibrage 13 est ouverte, de manière à équilibrer les pressions entre les deux adsorbeurs 1a, 1b, classiquement de l'ordre de 2,5 bars. Il s'agit de l'étape d'équilibrage.

C'est alors que, au terme d'une temporisation, les vannes 4b et 9a sont ouvertes et la vanne d'équilibrage 13 est fermée, de manière à effectuer la saturation du second adsorbeur 1b et, parallèlement, la purge du premier adsorbeur. De la même manière que précédemment, le cycle se poursuit par les étapes successives de production d'oxygène à l'aide du second adsorbeur 1b, de pressurisation lente du premier adsorbeur 1a et d'équilibrage.

Les commentaires effectués précédemment, relatifs aux figures 1 à 4 et concernant le premier adsorbeur, sont ainsi transposables au second adsorbeur.

La production d'oxygène est ainsi cyclique et est réalisée alternativement à l'aide du premier et du second adsorbeurs.

Ce type d'installation engendre les inconvénients exposés ci-après.

Dans le cas où le débit consommé par le réseau de distribution en oxygène est très important, les adsorbeurs 1a, 1b ne peuvent pas produire de l'oxygène en quantité suffisante. Or, tant que la temporisation n'est pas expirée, la vanne 4a ou la vanne 4b reste ouverte, ce qui a pour effet d'autoriser le passage d'un important débit d'air au travers de l'adsorbeur concerné, et cela au-delà de ses capacités réelles. La concentration en oxygène à la sortie de l'adsorbeur chute donc de manière importante et le gaz alimentant le réseau de distribution comporte une faible concentration en oxygène.

On rappelle que la norme ISO 10083 impose une concentration en oxygène minimum de 90 % dans les réseaux de distribution correspondants. En pratique, une alarme est déclenchée à 92 % et la production doit être stoppée à 90 %.

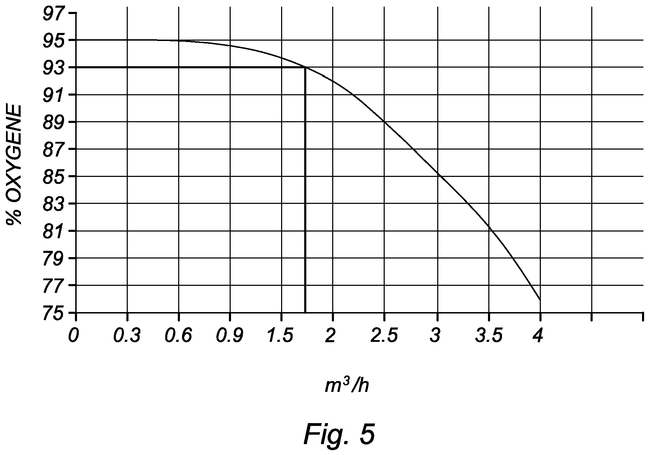

La figure 5 illustre la courbe représentant la concentration en oxygène en fonction du débit produit par l'adsorbeur. On remarque ainsi que, dans l'exemple de la figure 5, afin d'obtenir une concentration minimale de 93% en oxygène, il n'est pas possible de dépasser un débit de production de l'ordre de 1,7 m³/h.

Dès lors, dans le cas où le débit d'oxygène nécessité par le réseau de distribution est trop important, l'installation de l'art antérieur risque de déclencher l'alarme, voire de provoquer son arrêt.

Le document JP 2008 195556 décrit un procédé pour produire de l'oxygène à haute concentration à partir de l'air par adsorption à variation de pression, comportant notamment les étapes consistant à :
- alimenter en air un premier adsorbeur,
- alimenter une conduite d'évacuation avec l'oxygène produit par le premier adsorbeur en ouvrant une première vanne d'évacuation lorsque la pression mesurée à la sortie du premier adsorbeur dépasse une valeur prédéterminée,
- alimenter en air un deuxième adsorbeur, et
- alimenter la conduite d'évacuation avec l'oxygène produit par le deuxième adsorbeur en ouvrant une deuxième vanne d'évacuation lorsque la pression mesurée à la sortie du deuxième adsorbeur dépasse une valeur prédéterminée.

L'invention vise à remédier à ces inconvénients en proposant un procédé de traitement de fluide par adsorption à variation de pression qui permet de respecter les normes imposées, c'est-à-dire qui garantit une production d'oxygène avec une concentration minimum déterminée, même lorsqu'un débit d'oxygène important est demandé.

A cet effet, l'invention concerne un procédé de traitement de fluide par adsorption à variation de pression, caractérisé en ce qu'il est réalisé de manière cyclique, chaque cycle comportant au moins les étapes consistant à :
- alimenter en fluide un premier adsorbeur contenant un lit d'adsorbant apte à séparer l'oxygène dudit fluide, ledit premier adsorbeur comportant une entrée d'alimentation en fluide et une sortie d'extraction de l'oxygène,
- stopper l'alimentation en fluide du premier adsorbeur,
- alimenter une conduite d'évacuation avec l'oxygène produit par le premier adsorbeur et mesurer, par l'intermédiaire d'un paramètre représentatif du débit, le débit d'oxygène extrait du premier adsorbeur,
- stopper l'extraction d'oxygène du premier adsorbeur, lorsque le débit extrait dépasse une valeur prédéterminée,
- purger le fluide restant dans le premier adsorbeur,
- alimenter un second adsorbeur, contenant un lit d'adsorbant apte à séparer l'oxygène dudit fluide, ledit second adsorbeur comportant une entrée d'alimentation en fluide et une sortie d'extraction de l'oxygène ;
- stopper l'alimentation en fluide du second adsorbeur,
- alimenter une conduite d'évacuation avec l'oxygène produit par le second adsorbeur et mesurer, par l'intermédiaire d'un paramètre représentatif du débit, le débit d'oxygène extrait du second adsorbeur,
- stopper l'extraction d'oxygène du second adsorbeur, lorsque le débit extrait dépasse une valeur prédéterminée,
- purger le fluide restant dans le second adsorbeur, dans lequel les sorties d'extraction des premier et second adsorbeurs sont reliés l'un à l'autre par l'intermédiaire d'une conduite de liaison, durant toute la durée du cycle.

De cette manière, il est possible d'alterner entre les différents adsorbeurs afin d'éviter que le débit extrait, c'est-à-dire produit, par chaque adsorbeur ne dépasse une valeur déterminée, calculée en fonction des capacités de chaque adsorbeur. On s'assure ainsi que les capacités réelles de chaque adsorbeur ne sont pas dépassées, ce qui garantit une concentration en oxygène qui soit toujours suffisante.

Selon une caractéristique de l'invention, le débit d'oxygène issu du premier, respectivement du second adsorbeur, est mesuré par l'intermédiaire d'un capteur de pression au niveau de la sortie d'extraction du premier adsorbeur, respectivement du second adsorbeur.

La mesure de la chute de pression donne une information sur le débit d'oxygène produit par chacun des adsorbeurs et est facile à réaliser.

Selon une variante de réalisation, le débit d'oxygène issu du premier, respectivement du second adsorbeur, est mesuré par l'intermédiaire d'un débitmètre au niveau de la conduite d'évacuation.

Les sorties d'extraction des premier et second adsorbeurs sont reliés l'un à l'autre par l'intermédiaire d'une conduite de liaison, durant toute la durée du cycle.

La conduite de liaison permet le balayage par un courant d'oxygène pour terminer la désorption de l'azote dans les adsorbeurs ainsi que la montée en pression progressive de ceux-ci.

Selon une possibilité de l'invention, le fluide circulant dans la conduite de liaison traverse des moyens de limitation du débit.

Cette caractéristique permet d'assurer une montée en pression lente du second adsorbeur purgé lors de l'alimentation en fluide du premier adsorbeur, et inversement.

En outre, la limitation du débit permet de s'assurer qu'une quantité minimum d'oxygène soit utilisée pour effectuer le balayage de l'autre adsorbeur par un courant d'oxygène.

Préférentiellement, le débit d'oxygène issu du premier, respectivement du second adsorbeur, est mesuré par l'intermédiaire d'un capteur de pression unique, agencé pour être raccordé alternativement, soit à la sortie d'extraction du premier adsorbeur, soit à la sortie d'extraction du second adsorbeur.

L'utilisation d'un même capteur de pression permet d'éviter les effets d'une éventuelle dérive d'un capteur par rapport à l'autre. En outre, de cette manière, le capteur n'est pas soumis à des variations de pression trop brutales, en particulier lors de la purge des adsorbeurs.

Selon une caractéristique de l'invention, l'extraction d'oxygène du premier adsorbeur, respectivement du second adsorbeur, est stoppée si la durée de l'extraction dépasse une valeur prédéterminée.

De cette manière, si au terme de la temporisation, le débit maximal de production de l'adsorbeur concerné n'est pas atteint, c'est-à-dire si le débit mesuré ne dépasse pas la valeur prédéterminée, le cycle suit tout de même son cours et le passage à l'étape suivante est automatiquement réalisé.

Avantageusement, l'alimentation en fluide du premier adsorbeur, respectivement du second adsorbeur, est stoppée lorsque la durée d'alimentation dépasse une valeur prédéterminée.

De toute façon, l'invention sera bien comprise à l'aide de la description qui suit, en référence au dessin schématique annexé représentant, à titre d'exemples non limitatifs, deux formes d'exécution de cette installation et de ce procédé de traitement de fluide par adsorption à variation de pression.
Figure 1 à 4 sont des vues schématiques d'une installation de type PSA selon l'art antérieur ;
Figure 5 est un diagramme représentant le pourcentage d'oxygène obtenu par un adsorbeur, en fonction du débit de gaz produit ;
Figure 6 à 9 sont des vues correspondant respectivement aux figures 1 à 4, d'une première forme de réalisation de l'invention ;
Figure 10 à 13 sont des vues correspondant respectivement aux figures 1 à 4, d'une seconde forme de réalisation de l'invention.

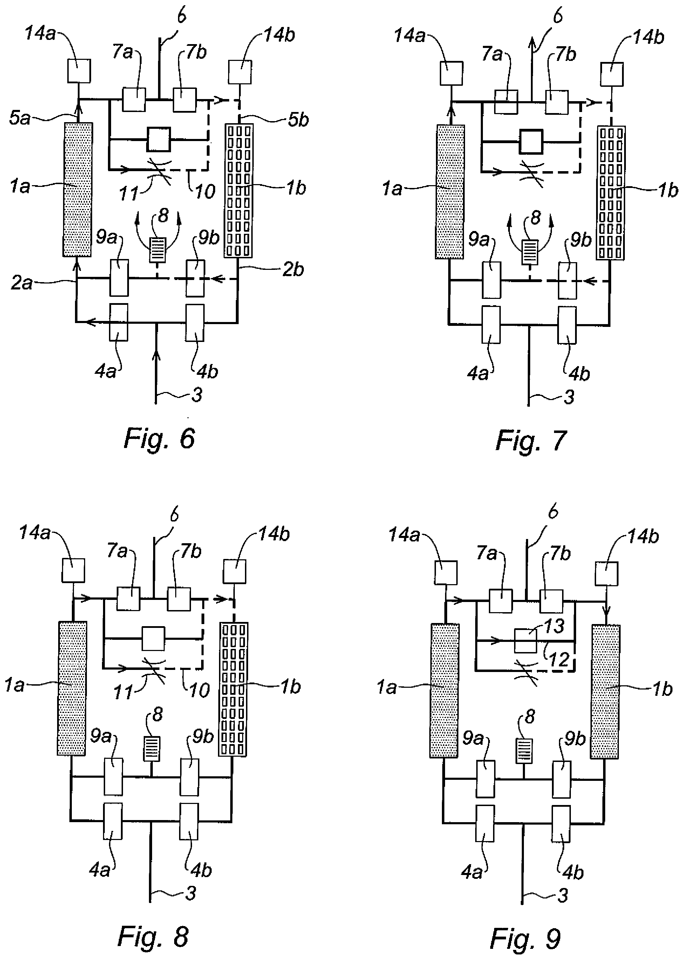

Une première forme de réalisation de l'invention est illustrée aux figures 6 à 9. Ces figures représentent une installation de traitement de fluide par adsorption à variation de pression comportant un premier et un second adsorbeurs 1a, 1b, comportant chacun un lit d'adsorbant apte à séparer l'oxygène de l'air. L'air étant essentiellement constitué d'oxygène et d'azote, le lit d'adsorbant permet de piéger l'azote afin d'augmenter la concentration en oxygène. Plus particulièrement, le lit d'adsorbant est un tamis moléculaire constitué de billes de zéolithe.

Chaque adsorbeur 1a, 1b comporte une entrée d'alimentation 2a, 2b reliée à une conduite 3 d'alimentation en air par l'intermédiaire d'une électrovanne 4a, 4b dite d'alimentation et une sortie d'extraction 5a, 5b de l'oxygène produit, reliée à une conduite d'évacuation 6 par l'intermédiaire d'une électrovanne d'évacuation 7a, 7b.

Chaque entrée 2a, 2b des adsorbeurs 1a, 1b est en outre reliée à un silencieux de purge ou d'extraction 8 par l'intermédiaire d'une électrovanne 9a, 9b dite de régénération.

De plus, les sorties 5a, 5b des adsorbeurs 1a, 1b sont reliées entre elles par l'intermédiaire d'une première conduite de liaison 10 équipée d'un réducteur de débit réglable 11, et d'une seconde conduite de liaison 12 équipée d'une vanne d'équilibrage 13.

Un capteur de pression 14a, 14b permet de mesurer la pression au niveau de chacune des sorties 5a, 5b des adsorbeurs 1a, 1b.

Le fonctionnement de cette installation va maintenant être décrit plus en détail.

Dans une première étape, dite de saturation et représentée à la figure 6, les vannes 4a et 9b sont ouvertes et les vannes 4b, 9a et 13 sont fermées.

L'air sous pression est amené par la conduite 3 d'alimentation en air, traverse la vanne d'alimentation 4a associée au premier adsorbeur 1a, et pénètre dans celui-ci de manière à ce que l'oxygène contenu dans l'air soit séparé de l'azote puis rejeté au niveau de la sortie 5a. Au fur et à mesure de l'alimentation en air, la pression P1 au niveau de la sortie 2a du premier adsorbeur 1a augmente.

Parallèlement, l'ouverture de la vanne de régénération 9b permet au gaz retenu dans le second adsorbeur 1b de s'échapper brutalement par le silencieux de purge 8. La pression dans le second adsorbeur 1b passe classiquement d'environ 2,5 bars à 0 bar en une fraction de seconde, ce qui permet de désorber l'azote piégé dans le lit d'adsorbant. Puis, le second adsorbeur 1b est balayé par un courant d'oxygène provenant de la liaison 10 entre les sorties 5a et 5b des premier et second adsorbeurs 1a et 1b afin de terminer la désorption de l'azote. Toutefois, ce courant d'oxygène reste minime du fait de la présence d'un réducteur de débit 11.

Il s'agit de l'étape de saturation / de régénération du premier adsorbeur 1a et de purge du second adsorbeur 1b.

Au terme d'une temporisation, la valeur de la pression P1 est mémorisée, la vanne 7a est ouverte et les vannes 4a et 9b sont fermées, comme cela est représenté à la figure 7.

L'oxygène produit par le premier adsorbeur 1a traverse alors la vanne 7a et entre dans ladite conduite d'évacuation 6, cette dernière alimentant par exemple un réseau de distribution en oxygène (non représenté). Il s'agit de l'étape de production d'oxygène à l'aide du premier adsorbeur 1a.

Cette étape de production est stoppée lorsque la pression détectée par le capteur 14a atteint une valeur P3, fonction de la valeur mémorisée P1 selon la formule suivante : P3 = P1 - ΔP, dans laquelle ΔP est une différence de pression prédéterminée, calculée en fonction du débit maximum pouvant être fournie par l'adsorbeur. Par exemple, P1 est de l'ordre de 5,2 bars et P3 est de l'ordre de 4,8. Ainsi, lorsque la pression aura chutée de 0,4 bar lors de la production, cette étape de production est stoppée, c'est-à-dire la vanne 7a est fermée, comme cela est illustrée à la figure 8.

On remarque que l'étape de production est bornée par deux valeurs de pression, à savoir P1 et P3 et la chute de pression ΔP entre ces deux valeurs permet de fixer un volume constant de production à chaque cycle et pour chaque adsorbeur. Un débit maximum de production est donc imposé, ce qui permet de maîtriser la concentration de l'oxygène produit. Afin d'augmenter le débit de production, il suffit d'augmenter la valeur de la chute de pression ΔP, et inversement pour le réduire.

L'oxygène restant dans le premier adsorbeur 1a est dirigé vers le second adsorbeur 1b, par l'intermédiaire de la conduite de liaison 10 et du réducteur de débit 11. Cette étape, représentée à la figure 8, est l'étape de pressurisation lente du second adsorbeur 1b.

Ensuite, comme cela est représenté à la figure 9, au terme d'une temporisation, la vanne d'équilibrage 13 est ouverte, de manière à équilibrer les pressions entre les deux adsorbeurs 1a, 1b, classiquement de l'ordre de 2,5 bars. Il s'agit de l'étape d'équilibrage.

Puis, au terme d'une temporisation, les vannes 4b et 9a sont ouvertes et la vanne d'équilibrage 13 est fermée, de manière à effectuer la saturation du second adsorbeur 1b et, parallèlement, la purge du premier adsorbeur. De la même manière que précédemment, le cycle se poursuit par les étapes successives de production d'oxygène à l'aide du second adsorbeur 1b, de pressurisation lente du premier adsorbeur 1a et d'équilibrage.

Ces étapes ne sont pas représentées aux figures 6 à 9, ces dernières ne représentant que la moitié d'un cycle complet. Cependant, comme vu précédemment, le cycle est symétrique et les étapes relatives à l'adsorbeur 1a sont transposables à l'adsorbeur 1b, et inversement.

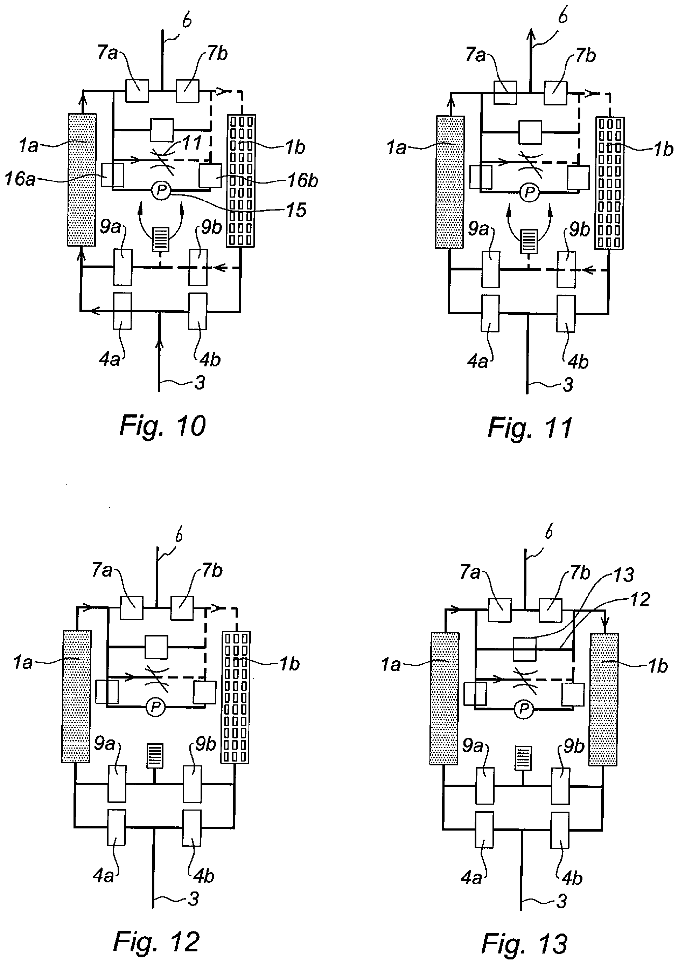

Une seconde forme de réalisation de l'invention est représentée aux figures 10 à 13.

Cette forme de réalisation diffère de la première uniquement en ce que les capteurs de pression 14a et 14b ont été remplacés par un capteur de pression unique 15, mesurant la pression au niveau de chacune des extrémités de la branche de liaison 10, de part et d'autre du réducteur de débit.

Des électrovannes 16a, 16b sont disposées de part et d'autre du capteur de pression 15.

Seule l'une des vannes 16a, 16b est ouverte, l'autre étant fermée.

Dans l'exemple représenté aux figures 10 à 13, la vanne 16a est ouverte et la vanne 16b est fermée de sorte que la pression au niveau de la sortie 5a de l'adsorbeur 1a peut être mesurée. A l'inverse, dans le cas non représenté où la vanne 16b est ouverte et la vanne 16a est fermée, la pression au niveau de la sortie 5b de l'adsorbeur 1b peut être mesurée. Cette forme de réalisation permet donc de remplacer l'utilisation de deux capteurs distincts par l'utilisation d'un unique capteur de pression, apte à mesurer les pressions en sortie de chacun des adsorbeurs 1a et 1b, en fonction de l'état des vannes 16a et 16b.

Comme il va de soi l'invention ne se limite pas aux seules formes de réalisation de cette installation et de ce procédé, décrites ci-dessus à titre d'exemple, mais elle embrasse au contraire toutes les variantes. C'est ainsi notamment qu'un débitmètre, monté sur la conduite d'évacuation, peut être utilisé afin de déterminer le débit produit par chacun des adsorbeurs.

## Revendications

1. Procédé de traitement de fluide par adsorption à variation de pression, **caractérisé en ce qu'**il est réalisé de manière cyclique, chaque cycle comportant au moins les étapes consistant à :
- alimenter en fluide un premier adsorbeur (1a) contenant un lit d'adsorbant apte à séparer l'oxygène dudit fluide, ledit premier adsorbeur (1a) comportant une entrée (2a) d'alimentation en fluide et une sortie (5a) d'extraction de l'oxygène,
- stopper l'alimentation en fluide du premier adsorbeur (1a),
- alimenter une conduite d'évacuation (6) avec l'oxygène produit par le premier adsorbeur (1a) et mesurer, par l'intermédiaire d'un paramètre représentatif du débit (P1, P3), le débit d'oxygène extrait du premier adsorbeur (1a),
- stopper l'extraction d'oxygène du premier adsorbeur (1a), lorsque le débit extrait dépasse une valeur prédéterminée,
- purger le fluide restant dans le premier adsorbeur (1a),
- alimenter un second adsorbeur (1b), contenant un lit d'adsorbant apte à séparer l'oxygène dudit fluide, ledit second adsorbeur (1b) comportant une entrée (2b) d'alimentation en fluide et une sortie (5b) d'extraction de l'oxygène ;
- stopper l'alimentation en fluide du second adsorbeur (1b),
- alimenter une conduite d'évacuation (6) avec l'oxygène produit par le second adsorbeur (1b) et mesurer, par l'intermédiaire d'un paramètre représentatif du débit (P1, P3), le débit d'oxygène extrait du second adsorbeur (1b),
- stopper l'extraction d'oxygène du second adsorbeur (1b), lorsque le débit extrait dépasse une valeur prédéterminée,
- purger le fluide restant dans le second adsorbeur (1b),
dans lequel les sorties d'extraction (5a, 5b) des premier et second adsorbeurs (1a, 1b) sont reliés l'un à l'autre par l'intermédiaire d'une conduite de liaison (10), durant toute la durée du cycle.

2. Procédé selon la revendication 1, **caractérisé en ce que** le débit d'oxygène issu du premier (1a), respectivement du second adsorbeur (1b), est mesuré par l'intermédiaire d'un capteur de pression (14a, 14b) au niveau de la sortie d'extraction (5a, 5b) du premier adsorbeur (1a), respectivement du second adsorbeur (1b).

3. Procédé selon la revendication 1, **caractérisé en ce que** le débit d'oxygène issu du premier (1a), respectivement du second adsorbeur (1b), est mesuré par l'intermédiaire d'un débitmètre au niveau de la conduite d'évacuation (6).

4. Procédé selon l'une des revendications 1à 3, **caractérisé en ce que** le fluide circulant dans la conduite de liaison traverse des moyens de limitation du débit (8).

5. Procédé selon la revendication 4 lorsqu'elle ne dépend pas des revendications 2 et 3, **caractérisé en ce que** le débit d'oxygène issu du premier (1a), respectivement du second adsorbeur (1b), est mesuré par l'intermédiaire d'un capteur de pression unique (15), agencé pour être raccordé alternativement, soit à la sortie d'extraction (5a) du premier adsorbeur (1a), soit à la sortie d'extraction (5b) du second adsorbeur (1b).

6. Procédé selon l'une des revendications 1 à 5, **caractérisé en ce que** l'extraction d'oxygène du premier adsorbeur (1a), respectivement du second adsorbeur (1b), est stoppée si la durée de l'extraction dépasse une valeur prédéterminée.

7. Procédé selon l'une des revendications 1 à 6, **caractérisé en ce que** l'alimentation en fluide du premier adsorbeur (1a), respectivement du second adsorbeur (1b), est stoppée lorsque la durée d'alimentation dépasse une valeur prédéterminée.

## Patentansprüche

1. Fluidbehandlungsverfahren durch Adsorption mit Druckvariation, **dadurch gekennzeichnet, dass** es auf zyklische Weise durchgeführt wird, wobei jeder Zyklus mindestens die folgenden Schritte umfasst, bestehend aus:
- Versorgen mit Fluid eines ersten Adsorbers (1a), enthaltend ein Adsorptionsmittelbett, das ausgelegt ist, um den Sauerstoff von dem Fluid zu trennen, wobei der erste Adsorber (1a) einen Eingang (2a) zur Versorgung mit Fluid und einen Ausgang (5a) zur Extraktion von Sauerstoff umfasst,
- Beenden der Versorgung mit Fluid des ersten Adsorbers (1a),
- Versorgen einer Abführleitung (6) mit Sauerstoff, erzeugt durch den ersten Adsorber (1a), und Messen, mit Hilfe eines repräsentativen Parameters des Durchsatzes (P1, P3), des Sauerstoffdurchsatzes, extrahiert aus dem ersten Adsorber (1a),
- Beenden der Extraktion von Sauerstoff des ersten Adsorbers (1a), wenn der extrahierte Durchsatz einen vorbestimmten Wert übersteigt,
- Spülen des Fluids, das im ersten Adsorber (1a) verbleibt,
- Versorgen eines zweiten Adsorbers (1b), enthaltend ein Adsorptionsbett, das ausgelegt ist, um den Sauerstoff von dem Fluid zu trennen, wobei der zweite Adsorber (1b) einen Eingang (2b) zur Versorgung mit Fluid und einen Ausgang (5b) zur Extraktion von Sauerstoff umfasst;
- Beenden der Versorgung von Fluid des zweiten Adsorbers (1b),
- Versorgen einer Abführleitung (6) mit dem Sauerstoff, erzeugt durch den zweiten Adsorber (1b), und Messen, mit Hilfe eines repräsentativen Parameters des Durchsatzes (P1, P3), des Sauerstoffdurchsatzes, extrahiert aus dem zweiten Adsorber (1b),
- Beenden der Extraktion von Sauerstoff des zweiten Adsorbers (1b), wenn der extrahierte Durchsatz einen vorbestimmten Wert übersteigt,
- Spülen des Fluids, das im zweiten Adsorber (1b) verbleibt,
wobei die Extraktionsausgänge (5a, 5b) des ersten und des zweiten Adsorbers (1a, 1b) miteinander mit Hilfe einer Verbindungsleitung (10) während der gesamten Dauer des Zyklus verbunden sind.

2. Verfahren nach Anspruch 1, **dadurch gekennzeichnet, dass** der Sauerstoffdurchsatz aus dem ersten (1a) bzw. zweiten Adsorber (1b) mit Hilfe eines Drucksensors (14a, 14b) auf der Ebene des Extraktionsausgangs (5a, 5b) des ersten Adsorbers (1a) bzw. des zweiten Adsorbers (1b) gemessen wird.

3. Verfahren nach Anspruch 1, **dadurch gekennzeichnet, dass** der Sauerstoffdurchsatz aus dem ersten (1a) bzw. zweiten Adsorber (1b) mit Hilfe eines Durchsatzmessers auf der Ebene der Abführleitung (6) gemessen wird.

4. Verfahren nach einem der Ansprüche 1 bis 3, **dadurch gekennzeichnet, dass** das Fluid, das in der Verbindungsleitung zirkuliert, Mittel zur Begrenzung des Durchsatzes (8) durchquert.

5. Verfahren nach Anspruch 4, wenn es nicht von Anspruch 2 und 3 abhängt, **dadurch gekennzeichnet, dass** der Sauerstoffdurchsatz aus dem ersten (1a) bzw. zweiten Adsorber (1b) mit Hilfe eines einzigen Drucksensors (15) gemessen wird, der angeordnet ist, um alternativ entweder mit dem Extraktionsausgang (5a) des ersten Adsorbers (1a) oder mit dem Extraktionsausgang (5b) des zweiten Adsorbers (1b) verbunden zu sein.

6. Verfahren nach einem der Ansprüche 1 bis 5, **dadurch gekennzeichnet, dass** die Extraktion von Sauerstoff aus dem ersten (1a) bzw. zweiten Adsorber (1b) beendet wird, wenn die Dauer der Extraktion einen vorbestimmten Wert übersteigt.

7. Verfahren nach einem der Ansprüche 1 bis 6, **dadurch gekennzeichnet, dass** die Versorgung mit Fluid des ersten Adsorbers (1a) bzw. des zweiten Adsorbers (1b) beendet wird, wenn die Dauer der Versorgung einen vorbestimmten Wert übersteigt.

## Claims

1. A method for treating fluid by pressure swing adsorption, **characterized in that** it is carried out in a cyclic manner, each cycle including at least the steps of:
- supplying fluid to a first adsorber (1a) containing an adsorbent bed capable of separating oxygen from said fluid, said first adsorber (1a) including a fluid supply inlet (2a) and an oxygen extraction outlet (5a),
- stopping the supply of fluid to the first adsorber (1a),
- supplying a discharge pipe (6) with the oxygen produced by the first adsorber (1a) and measuring, by means of a representative parameter of the flow rate (P1, P3), the oxygen flow rate extracted from the first adsorber (1a),
- stopping the extraction of oxygen from the first adsorber (1a), when the extracted flow rate exceeds a predetermined value,
- purging the fluid remaining in the first adsorber (1a),
- supplying a second adsorber (1b), containing an adsorbent bed able to separate the oxygen from said fluid, said second adsorber (1b) including a fluid supply inlet (2b) and an oxygen extraction outlet (5b);
- stopping the supply of fluid to the second adsorber (1 ),
- supplying a discharge pipe (6) with the oxygen produced by the second adsorber (1b) and measuring, by means of a representative parameter of the flow rate (P1, P3), the oxygen flow rate extracted from the second adsorber (1b),
- stopping the extraction of oxygen from the second adsorber (1b), when the extracted flow rate exceeds a predetermined value,
- purging the fluid remaining in the second adsorber (1b),
wherein the extraction outlets (5a, 5b) of the first and second adsorbers (1a, 1b) are connected to one another by means of a connecting pipe (10), throughout the duration of the cycle.

2. The method according to claim 1, **characterized in that** the flow rate of oxygen coming from the first adsorber (1a), respectively the second adsorber (1b), is measured by means of a pressure sensor (14a, 14b) at the extraction outlet (5a, 5b) of the first adsorber (1a), respectively the second adsorber (1b).

3. The method according to claim 1, **characterized in that** the flow rate of oxygen coming from the first adsorber (1a), respectively the second adsorber (1b), is measured by means of a flowmeter at the discharge pipe (6).

4. The method according to any of claims 1 to 3, **characterized in that** the fluid circulating in the connecting pipe passes through means for limiting the flow rate (8).

5. The method according to claim 4 when not dependent on claims 2 and 3, **characterized in that** the flow rate of oxygen coming from the first adsorber (1a), respectively the second adsorber (1b), is measured by means of a single pressure sensor (15), arranged to be connected, alternately, either to the extraction outlet (5a) of the first adsorber (1a) or to the extraction outlet (5b) of the second adsorber (1b).

6. The method according to any of claims 1 to 5, **characterized in that** the extraction of oxygen from the first adsorber (1a), respectively the second adsorber (1b), is stopped if the extraction duration exceeds a predetermined value.

7. The method according to any of claims 1 to 6, **characterized in that** the supply of fluid to the first adsorber (1a), respectively the second adsorber (1b), is stopped when the supply duration exceeds a predetermined value.
